Europäisches Patentamt

**European Patent Office**

**Office européen des brevets**

(11) Numéro de publication: **0 152 393**
A2

(12) # DEMANDE DE BREVET EUROPEEN

(21) Numéro de dépôt: **85870012.3**

(22) Date de dépôt: **23.01.85**

(51) Int. Cl.⁴: **B 05 D 1/26**
**F 16 L 59/02**

(30) Priorité: **27.01.84 BE 212292**

(43) Date de publication de la demande:
**21.08.85 Bulletin 85/34**

(84) Etats contractants désignés:
**CH FR IT LI NL**

(71) Demandeur: **PLA-MA BELGIUM N.V.**
**Floris Primsstraat, 3**
**B-2280 Grobbendonk (Anvers)(BE)**

(72) Inventeur: **Verschueren, Frank J.J.**
**Belgielei 90 Bus 5**
**B-2018 Antwerpen(BE)**

(74) Mandataire: **Overath, Philippe et al,**
**Cabinet Bede 13, Avenue Antoine Depage**
**B-1050 Bruxelles(BE)**

(54) **Procédé et dispositif pour le traitement d'une gaine isolante pour tuyaux.**

(57) La gaine isolante pourvue d'une ouverture en forme de
fente longitudinale est traitée de manière telle qu'au moins
une des lèvres de la fente formée par incision de la gaine
isolante reçoit l'application d'un agent de liaison auto-collant
et celui-ci est protégé vis-à-vis de l'autre lèvre de la fente par
une bande anti-adhésive.

FIG. 2

EP 0 152 393 A2

### Procédé et dispositif pour le traitement d'une gaine isolante pour tuyaux

L'invention est relative à un procédé ainsi qu'à un dispositif pour le traitement d'une gaine isolante pour tuyaux présentant une ouverture en forme de fente longitudinale. Elle concerne plus particulièrement l'application d'un agent de liaison auto-collant entre les faces de la fente longitudinale de la gaine.

Les gaines isolantes disponibles dans le commerce consistent généralement en une buse à paroi épaisse, le plus souvent en mousse, dans laquelle est pratiquée une fente d'ouverture longitudinale pour faciliter sa mise en place sur une tuyauterie existante. Après avoir placé la gaine isolante, par exemple sur une conduite d'eau chaude, il faut fermer la fente d'ouverture.

Plusieurs solutions ont été proposées à cet effet :
- fermeture par collage au moyen d'une colle spéciale provenant d'un tube séparé ;
- fermeture de la fente au moyen d'une bande adhésive appliquée sur la face extérieure de la fente ;
- fermeture de la fente au moyen de profils en matière plastique appliqués latéralement le long de la fente et s'emboîtant l'un dans l'autre.

Ces solutions ont comme inconvénients que lors du placement de la gaine isolante, il faut encore appliquer séparément un moyen de liaison (colle, bande adhésive,etc.) ou qu'il faut encore emboîter l'un dans l'autre les profils en PVC dans des conditions souvent difficiles.

L'invention vise à faciliter la mise en place d'une gaine isolante par l'application d'un moyen ou agent de liaison auto-collant lors de la fabrication de la gaine en sorte que l'utilisateur n'ait lors du placement de la gaine isolante, qu'à enlever une bande anti-adhésive et à presser légèrement l'une contre l'autre les parois latérales de la fente.

Cet objectif est atteint par le procédé et le dispositif selon l'invention où au moins une des lèvres de la fente formée par incision de la gaine isolante reçoit une application d'agent de liaison auto-collant et celui-ci est protégé vis-à-vis de l'autre lèvre de la fente par une bande anti-adhésive.

D'autres particularités et caractéristiques de l'invention ressortiront de la description ci-après d'une forme de réalisation, avec référence aux dessins ci-annexés dans lesquels :

- la figure 1 est une représentation schématique du dispositif suivant l'invention ;

- la figure 2 montre les opérations principales de l'application de l'adhésif et de la bande anti-adhésive ;

- la figure 3 montre un détail de la gaine isolante obtenue selon l'invention ;

- la figure 4 est une vue latérale d'un appareil pour la détection et la localisation de la fente de la gaine isolante ;

- la figure 5 est une vue de dessus de l'appareil suivant la figure 4 ;

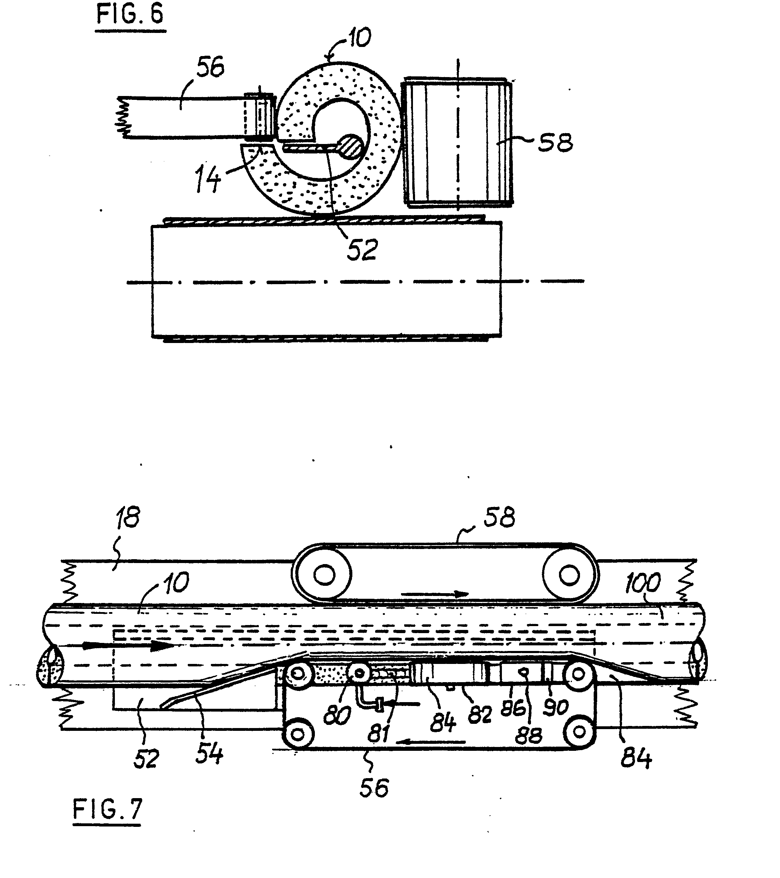

- la figure 6 montre un détail qui explique la façon de déformer latéralement la gaine pour libérer une des faces ou lèvres de la fente ;

- la figure 7 est une vue de dessus de l'appareil applicateur d'adhésif et de bande anti-adhésive.

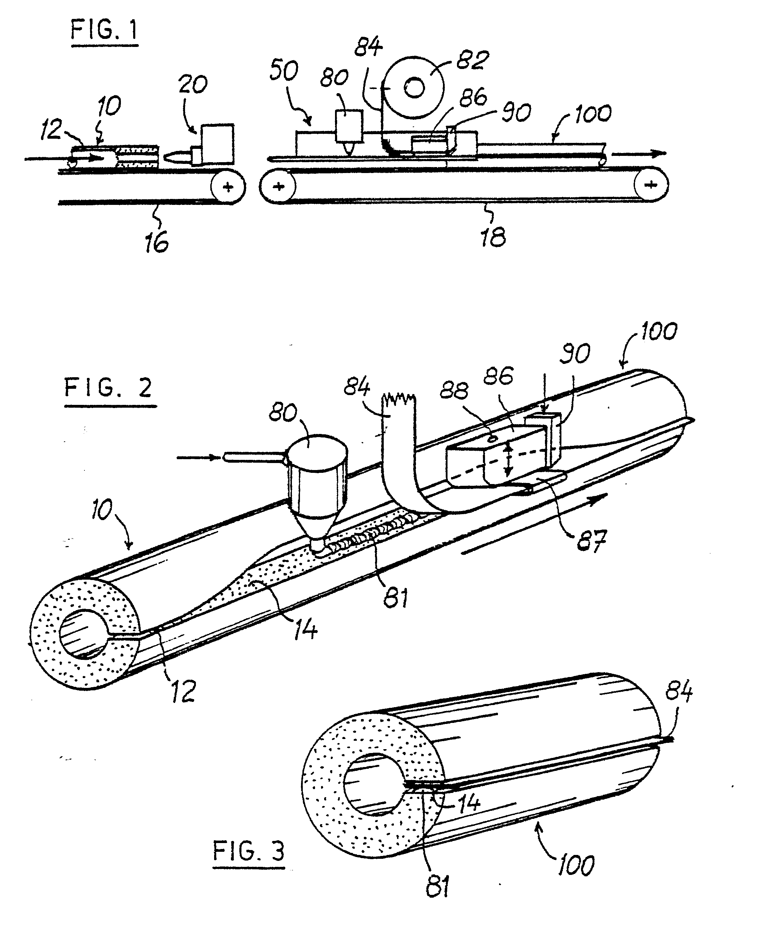

La figure 1 montre une vue d'ensemble du dispositif lequel consiste essentiellement en un premier convoyeur 16 pour l'amenée d'une gaine isolante 10 pourvued'une ouverture en forme de fente 12.

En 20 se trouve un appareil pour la détection automatique de la position de la fente 12, celle-ci étant tournée et guidée pour la mettre dans un plan déterminé.

La fente 12 étant dans cette position bien déterminée, la gaine isolante arrive sur un deuxième convoyeur 18 pourvu d'un appareil 50 appliquant une colle ou un adhésif par l'intermédiaire d'une tête 80 et une bande anti-adhésive 84 laquelle est déroulée d'un dévidoir 82.

La gaine 100 ainsi obtenue est ensuite enlevée par le convoyeur 18.

Pour permettre l'application d'adhésif sur une des lèvres (faces radiales) de la fente 12, il est nécessaire de déformer localement la gaine isolante 10 sur une distance déterminée comme représenté sur la figure 2 de manière à rendre accessible une des lèvres 14 de la fente. La manière de déformer localement la gaine sera expliquée dans la suite de cette description.

La tête 80 applique un cordon d'adhésif 81 continu ou intermittent sur la lèvre 14 ainsi libérée. Une bande anti-adhésive 84 est ensuite appliquée sur le cordon, un sabot 86 et un appareil de coupe 90 étant prévus à cet effet.

La partie supérieure de la fente 12 est ensuite relâchée pour la formation d'une gaine isolante 100 pourvue d'une lèvre auto-collante comme représenté sur la figure 3.

En appliquant la gaine isolante sur une conduite à isoler, l'utilisateur n'a qu'à ôter la bande anti-adhésive et à presser les deux lèvres de la fente légèrement l'une contre l'autre.

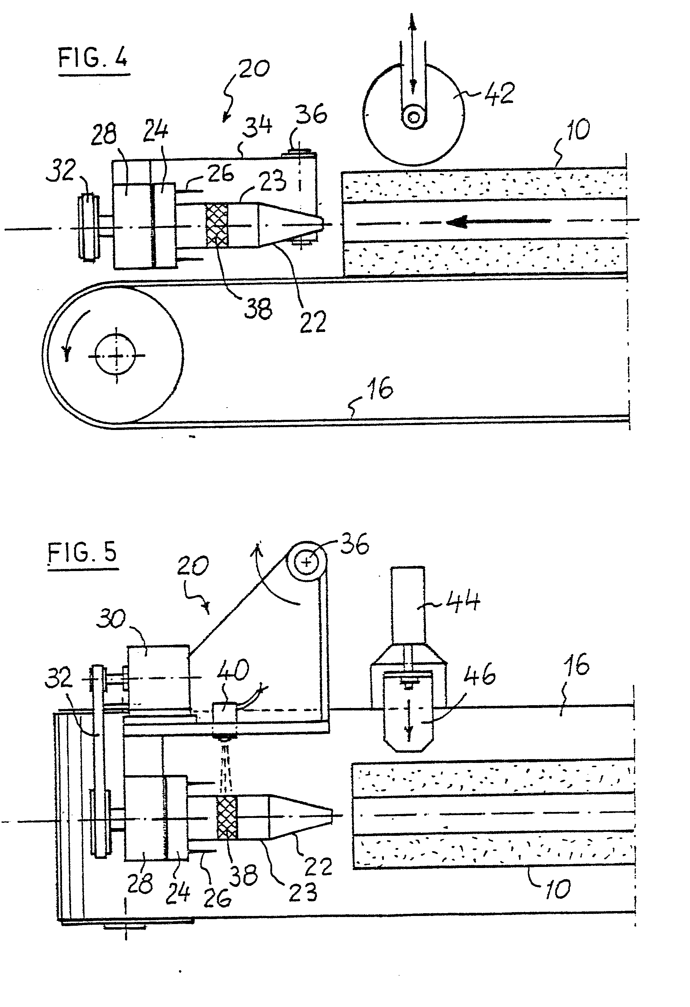

Le détecteur de fente 20 tel que représenté sur les figures 4 et 5 comporte un stylet 22 en substance conique qui s'étend jusqu'à une partie cylindrique 23 reliée à une bague 24 pourvue d'une série d'aiguilles 26 s'étendant parallèlement à l'axe du stylet 22.

Le stylet 22 et la bague 24 peuvent être entraînés en rotation par rapport à un palier 28 au moyen d'un moteur 30 et d'une courroie de transmission 32.

Le moteur est de préférence électrique et comporte un réducteur de vitesse et un frein incorporés.

Le palier 28 et le moteur 30 sont fixés sur une console 34 qui peut faire pivoter tout l'ensemble par rapport au convoyeur 16 et ce autour d'un axe 36 monté sur le côté du convoyeur.

La partie cylindrique du stylet 22 porte une bande ré-

**0152393**

fléchissante 38 laquelle peut coopérer avec un détecteur optique 40 prévu sur la console 34 de l'appareil 20.

La partie cylindrique 23 du stylet 22 a un diamètre
légèrement plus grand que le diamètre intérieur de la
gaine isolante 10.

Ce détecteur 20 peut également comporter un galet
presseur 42 qui doit empêcher la gaine isolante amenée
par l'intermédiaire du convoyeur 16 de glisser lorsqu'elle est empalée sur le stylet 22.

Le galet 42 est déplaçable vers le haut lors de la
rotation de la gaine isolante.

Il y a également un vérin 44 capable de déplacer un
bras de guidage 46 radialement par rapport à la gaine
isolante 10, ce bras étant dans le plan du détecteur
optique 40.

Le détecteur 20 fonctionne comme suit : à l'arrivée
d'une gaine isolante 10 pourvue d'une fente longitudinale 12, l'appareil 20 se trouve dans la position
représentée sur les figures 4 et 5. La gaine isolante
10 est amenée par le convoyeur 16 au stylet 22 sur
lequel elle est empalée jusqu'à ce que son extrémité
s'applique sur la bague 24, les aiguilles 26 s'étant
alors plantées dans la paroi de caoutchouc mousse de
la gaine.

A ce moment, le convoyeur 16 s'arrête et sous l'entraînement du moteur 30 et de la courroie 32, le
stylet 22 et la bague 24 commencent à tourner avec la
gaine isolante 10.

Comme la partie cylindrique du stylet a un diamètre supérieur au diamètre interne de la gaine isolante, la fente 12 s'ouvre légèrement sur toute la longueur de la partie cylindrique 23 si bien que le détecteur 40 peut, le long de cette fente 12, détecter la bande réfléchissante 38 lorsque la fente passe le long de la face radiale du détecteur 40.

Dès que le détecteur optique 40 a perçu la fente 12, le moteur 30 s'arrête et le vérin 44 est mis en action en sorte que le bras de guidage 46 soit déplacé radialement jusqu'à la fente 12.

La fente 12 est dès lors maintenue dans une position déterminée par le bras 46 et le détecteur 20 peut s'écarter ensuite sur l'axe 36 pour permettre le passage ultérieur de la gaine isolante.

Le convoyeur 16 peut être remis en action et la gaine isolante est amenée ensuite à un autre convoyeur 18 où la fente 12 reste maintenue par le bras 46 dans une position déterminée.

Un appareil 50 applicateur d'agent de liaison autocollant tel que de l'adhésif dans cette forme d'exécution, prend aussitôt en charge la gaine isolante au début du deuxième convoyeur 18.

Un guide radial 52 maintient la fente 12 dans la position voulue tandis qu'une face inclinée repousse vers l'intérieur la partie de la gaine isolante qui surmonte la fente 12.

Cette partie supérieure est ensuite maintenue vers l'intérieur, sur une distance déterminée, sous l'action d'un ruban-guide 56 qui se meut à la vitesse du convoyeur 18.

La lèvre 14 se libère ainsi sur cette distance et peut recevoir une application d'adhésif 81 par la tête 80.

L'arrière de la gaine isolante 10 est retenu et guidé par un deuxième ruban-guide 58 qui se meut également à cette même vitesse.

A proximité immédiate de la tête 80, le cordon d'adhésif 81 reçoit l'application d'une bande anti-adhésive 84. Celle-ci est déroulée à partir d'un dévidoir 82 et pressée contre le cordon 81 par un sabot 86.

Lorsqu'une longueur complète de la gaine isolante a été traitée, en général de 1 à 3 m, la bande 84 peut être coupée à la longueur voulue au moyen du couteau 90.

Pour garder la bande anti-adhésive 84 en bon état, pour une longueur suivante, le sabot 86 comporte de préférence à sa partie inférieure des lames-guides 87 de façon que le bout libre coupé de la bande 84 reste pendu au-dessus du sabot 86 grâce à la lame de guidage repliée qui s'y trouve.

La bande 84 est emportée par le cordon d'adhésif dès qu'une nouvelle longueur de gaîne isolante est traitée.

De l'air peut éventuellement être soufflé sur la bande anti-adhésive 84 par des ouvertures 88 prévues dans le sabot 86 pour former un coussin d'air entre le sabot et la bande, ce qui facilite le glissement de celle-ci.

On peut utiliser comme bande anti-adhésive une bande
de silicone et la sorte d'adhésif peut être choisie
parmi les adhésifs thermoplastiques tels que les
"hot melt" qui ont des propriétés adhésives durables.

**0152393**

Revendications

1. Procédé de traitement d'une gaine isolante pourvue d'une ouverture en forme de fente longitudinale, caractérisé en ce qu'au moins une des lèvres de la fente formée par incision de la gaine isolante reçoit l'application d'un agent de liaison auto-collant et celui-ci est protégé vis-à-vis de l'autre lèvre de la fente par une bande anti-adhésive.

2. Procédé suivant la revendication 1, caractérisé par les opérations suivantes :
- détection et localisation de la fente de la gaine isolante qui arrive
- écartement par pression d'une des parois latérales ou lèvres de la fente sur une distance déterminée pour libérer l'autre lèvre de la fente
- application d'un adhésif auto-collant sur cette lèvre libre
- application d'une bande anti-adhésive sur l'adhésif auto-collant
- remise en place de la paroi latérale de la fente qui avait été écartée sur une distance déterminée
- enlèvement et stockage du produit final ou fini selon la procédure normale.

3. Dispositif pour l'application du procédé selon les revendications 1 et 2 comportant essentiellement un premier convoyeur (16) à l'extrémité duquel se trouve monté un détecteur (20) automatique pour détecter et déterminer la position de la fente (12), un deuxième convoyeur (18) au début duquel se trouve un appareil (50) pour déformer sur une distance déterminée la gaine isolante au moyen de rubans-guides (56,58), en sorte qu'une lèvre (14) de la fente se libère pour l'applica-

10                                    0152393

tion d'un adhésif (81) auto-collant et d'une bande
anti-adhésive (84).

4. Dispositif suivant la revendication 3,caractérisé
en ce que le détecteur (20) comporte essentiellement
un stylet (22) conique avec une partie cylindrique (23)
laquelle est reliée à une bague (24) pourvue d'une
série d'aiguilles (26) qui s'étendent parallèlement à
l'axe du stylet (22), celui-ci et la bague (24) pouvant
être entraînés en rotation par un moteur (30) et une
courroie de transmission (32).

5. Dispositif suivant la revendication 4, caractérisé
en ce que le stylet (22) et la bague (24) sont montés
dans un palier (28) qui est fixé avec le moteur (30)
sur une console (34) laquelle peut faire pivoter tout
l'ensemble du détecteur par rapport au convoyeur (16)
et ce autour d'un axe (36) monté sur le côté du convoyeur.

6. Dispositif suivant la revendication 4, caractérisé
en ce que la partie cylindrique du stylet (22) est
pourvue d'une bande réfléchissante (38) qui peut
coopérer avec un détecteur optique (40) fixé sur la
console (34) de l'appareil (30).

7. Dispositif suivant la revendication 4, caractérisé
en ce que le diamètre de la partie cylindrique (23) du
stylet (22) est légèrement supérieur au diamètre interne
de la gaine isolante à traiter.

8. Dispositif suivant la revendication 3, caractérisé
en ce qu'un vérin (44) est prévu à proximité immédiate
du détecteur (20) lequel vérin est fixé le long du
convoyeur (16) et peut déplacer un bras-guide (46) radialement par rapport à la gaine isolante (10) et ce
dans le même plan que le détecteur optique (40).

9. Dispositif suivant la revendication 3, caractérisé
en ce qu'un guide (52) prend ou reçoit la gaine isolante
(10) aussitôt sur le deuxième convoyeur (18) tandis
qu'une face inclinée (54) repousse vers l'intérieur
la partie de la gaine isolante qui surmonte la fente
(12), en maintenant cette partie vers l'intérieur par
un ruban-guide (56) qui se déplace à la vitesse du
convoyeur (18).

10. Dispositif suivant la revendication 9, caractérisé
en ce qu'un deuxième ruban-guide (58) se déplaçant
également à la  vitesse du convoyeur (18) retient et
guide la gaine isolante le long de sa partie arrière
à hauteur du ruban-guide (56).

11. Dispositif suivant la revendication 9, caractérisé
en ce qu'une tête (80) est fixée à hauteur du ruban-
guide (56) et applique un cordon d'adhésif (81) continu
ou intermittent sur la lèvre libre (14) de la fente.

12. Dispositif suivant la revendication 11, caractérisé
en ce qu'une bande anti-adhésive (84) est appliquée
ou pressée à proximité de la tête (80) sur l'adhésif
au moyen d'un sabot (86) à côté duquel est prévu un
appareil de coupe (90) pour couper la bande à longueur
voulue.

13. Dispositif suivant la revendication 12, caractérisé
en ce que le sabot (86) comporte à sa partie inférieure
une lame de guidage repliée pour retenir le bout coupé
de la bande anti-adhésive contre le dessous du sabot.

12 0152393

14. Gaine isolante obtenue par le procédé et le dispositif suivant les revendications 1 à 13.

15. En tant que produit commercial nouveau, une gaine isolante dont au moins une des lèvres de la fente formée par incision de la paroi de la gaine comporte un adhésif auto-collant lequel est protégé de l'autre lèvre de la fente par une bande anti-adhésive.

0152393

FIG. 1

FIG. 2

FIG. 3

FIG. 4

FIG. 5

0152393

0152393

FIG.6

56

10

58

14

52

18

58

10

100

80

52  54  81  84  82  86  90  88  84

56

FIG.7